# EUROPEAN PATENT APPLICATION

(11) **EP 4 436 251 A1**
(43) Date of publication of application: **25.09.2024**
(21) Application number: 23901743.7
(22) Date of filing: 23.11.2023
(51) Int. Cl.: H04W 28/082

(54) **DATA TRANSMISSION METHOD, APPARATUS AND SYSTEM**

(30) Priority: 07.01.2023 CN 202310022475
(71) Applicant: HUAWEI TECHNOLOGIES CO., LTD., Shenzhen Guangdong 518129 (CN)
(72) Inventor: WANG, Yaxin, Shenzhen, Guangdong 518129 (CN); YANG, Yanmei, Shenzhen, Guangdong 518129 (CN)
(74) Representative: Epping - Hermann - Fischer
(86) International application number: PCT/CN2023/133599
(87) International publication number: WO 2024/146292

(57) **Abstract**

Embodiments of this application provide a data transmission method, apparatus, and system. The method includes: A first data transmission server obtains an address of a second data transmission server, where one of the first data transmission server and the second data transmission server is a source data transmission server serving a terminal device, and the other is a target data transmission server of the terminal device. The first data transmission server sends a message to a third network element, where the message includes the address of the second data transmission server and an address of the first data transmission server, and the message is for enabling the third network element to configure a fourth network element to replace an address of data transmission of the terminal device during the data transmission of the terminal device. Based on the method, the data transmission of the terminal device may be switched from the source data transmission server to the target data transmission server, to improve data transmission quality of the terminal device.

## Description

### TECHNICAL FIELD

This application relates to the communication field, and more specifically, to a data transmission method, apparatus, and system.

### BACKGROUND

A terminal device needs to perform data transmission with a VAL server (VAL server) to use a vertical industry application provided by the VAL server. A service enabler architecture layer data delivery (service enabler architecture layer data delivery, SEALDD) server can provide a data transmission service for the terminal device and the VAL server. When the terminal device moves or the SEALDD server is overloaded, the SEALDD server serving the terminal device may fail to maintain quality of service of data transmission, or even cause service interruption.

### SUMMARY

Embodiments of this application provide a data transmission method, apparatus, and system, to improve data transmission quality of a terminal device.

According to a first aspect, a data transmission method is provided, including: A first server obtains an address of a second server, where one of the first server and the second server is a source server serving a terminal device, and the other is a target server of the terminal device; and the first server sends a message to a third network element, where the message includes the address of the second server and an address of the first server, and the message is for enabling the third network element to configure a fourth network element to replace an address of data transmission of the terminal device during the data transmission of the terminal device; and the replacing an address of data transmission of the terminal device includes: replacing the address of the data transmission of the terminal device with an address of the target server from an address of the source server, where the data transmission of the terminal device is uplink transmission; and/or replacing the address of the data transmission of the terminal device with the address of the source server from the address of the target server, where the data transmission of the terminal device is downlink transmission. That the message is for enabling the third network element to configure a fourth network element may be that the message is for triggering the third network element to configure the fourth network element, or the third network element configures the fourth network element based on the message. Based on the method, the target server of the terminal device is configured to support the data transmission switched from the source server, so that data transmission quality of the terminal device can be improved when switching is not sensed by the terminal device.

With reference to the first aspect, in some implementations of the first aspect, the first server is the source server serving the terminal device, and the second server is the target server of the terminal device; before a first server obtains an address of a second server, the method further includes: The first server sends a request message, where the request message is for requesting to switch the data transmission of the terminal device to the second server; and that a first server obtains an address of a second server includes: The first server receives a response to the request message, where the response includes the address of the second server. In this way, the first server may obtain the address of the second server from the second server in an active request manner. This helps obtain the address of the second server in a timely and on-demand manner. Optionally, after a first server obtains an address of a second server, the method further includes: The first server sends a context of the terminal device to the second server, where the context of the terminal device includes information about the data transmission between the first server and the terminal device, and the context of the terminal device is used by the second server to provide a data transmission service for the terminal device. The source server provides the context of the terminal device for the target server, so that the target server can provide a higher-quality data transmission service for the terminal device based on the context of the terminal device, for example, the information about the data transmission in the context.

With reference to the first aspect, in some implementations of the first aspect, the first server is the target server serving the terminal device, and the second server is the source server of the terminal device; and before a first server obtains an address of a second server, the method further includes: The first server receives a request message from the second server, where the request message is for requesting to switch the data transmission of the terminal device to the first server, and the request message includes the address of the second server. In this way, the first server can obtain the address of the second server more directly and quickly from the request message. Optionally, after a first server obtains an address of a second server, the method further includes: The first server receives a context of the terminal device from the second server, where the context of the terminal device includes information about the data transmission between the second server and the terminal device, and the context of the terminal device is used by the first server to provide a data transmission service for the terminal device. In this way, the target server can provide a higher-quality data transmission service for the terminal device based on the context of the terminal device, for example, the information about the data transmission in the context.

With reference to the first aspect, in some implementations of the first aspect, the message includes indication information, and the indication information indicates to replace the address of the data transmission of the terminal device. The explicit indication information in the message helps a message receiver quickly and accurately learn that the address of the data transmission of the terminal device needs to be replaced.

With reference to the first aspect, in some implementations of the first aspect, the request message includes second indication information, and the second indication information indicates to switch the data transmission of the terminal device to the target server by replacing the address of the data transmission of the terminal device. The explicit indication information in the message helps the message receiver quickly and accurately learn a manner in which the data transmission of the terminal device needs to be switched to the target server.

According to a second aspect, a data transmission method is provided, including: A first server sends a first message to a third network element, so that the third network element triggers establishment of a connection between a terminal device and a target server of the terminal device, where the first server is a source server or the target server of the terminal device, and the terminal device has a dual-connectivity capability; and the first server sends a second message to the terminal device, where the second message includes an address of the target server, and the address of the target server is for data transmission between the terminal device and the target server after the establishment of the connection. The method may support the terminal device in maintaining a connection to the source server and establishing a connection to the target server simultaneously, so that the target server and the source server can simultaneously provide data transmission services for the terminal device, to improve data transmission quality of the terminal device. With reference to the second aspect, in some implementations of the second aspect, that the terminal device has a dual-connectivity capability includes: The terminal device has a capability of connecting to both the source server and the target server. The first message includes connection information, and the connection information is for the establishment of the connection between the terminal device and the target server, so that the terminal device and the target server establish the connection based on the connection information.

With reference to the second aspect, in some implementations of the second aspect, the third network element is configured to maintain both a connection between the terminal device and the source server and the connection between the terminal device and the target server. Thanks to this maintenance function of the third network element, the terminal device may maintain the connections to both the source server and the target server for data transmission, so that the data transmission quality can be improved.

With reference to the second aspect, in some implementations of the second aspect, the first server is the source server of the terminal device; and before a first server sends a first message to a third network element, the method further includes: The first server sends a request message to the target server, where the request message is for requesting the target server to provide the data transmission service for the terminal device; and the first server receives a response to the request message from the target server, where the response includes the address of the target server. In this way, the first server may obtain an address of a second server from the second server in an active request manner. This helps obtain the address of the second server in a timely and on-demand manner.

With reference to the second aspect, in some implementations of the second aspect, after sending the first message and the second message, the first server maintains a connection to the terminal device, so that the first server can continue to provide the data transmission service for the terminal device. This avoids data transmission interruption of the terminal device. Optionally, if the terminal device is disconnected from the first server after a period of time or upon triggering, the target server serves as a unique server to provide the data transmission service for the terminal device.

With reference to the second aspect, in some implementations of the second aspect, after the first server sends a second message to the third network element, the method further includes: The first server learns that the connection between the terminal device and the target server has been established; and the first server sends information about data transmission between the first server and the terminal device to the target server, where the information about the data transmission is for the data transmission between the terminal device and the target server. In this way, the target server can process, based on the information about the data transmission after establishing the connection to the terminal device, data transmitted between the terminal device and the target server. This helps avoid a data loss, maintain data transmission continuity, and improve the data transmission quality.

With reference to the second aspect, in some implementations of the second aspect, the first server is the target server of the terminal device; and before a first server sends a first message to a third network element, the method further includes: The first server receives a request message from the terminal device, where the request message is for requesting the target server to provide a data transmission service for the terminal device; or the first server receives a request message from the source server, where the request message is for requesting the target server to provide a data transmission service for the terminal device.

With reference to the second aspect, in some implementations of the second aspect, after a first server sends a first message to a third network element, the method further includes: The first server notifies the source server that a connection between the terminal device and the first server has been established; and the first server receives, from the source server, information about data transmission between the source server and the terminal device, where the information about the data transmission is for data transmission between the terminal device and the first server. In this way, after establishing the connection to the terminal device, the target server can provide a higher-quality data transmission service for the terminal device based on the information about the data transmission.

According to a third aspect, an apparatus is provided, including a module configured to implement the method according to any one of the implementations of the first aspect and the second aspect. According to a fourth aspect, an apparatus is provided, including a processor, a memory, and an optional transceiver. The memory is configured to store instructions, and when the instructions are executed by the processor, the processor is enabled to implement the method according to any one of the implementations of the first aspect and the second aspect, and the transceiver is configured to receive and/or send a signal.

According to a fifth aspect, a computer-readable storage medium is provided. The computer-readable storage medium stores instructions, and when the instructions are run on a computer, the computer is enabled to perform the method according to any one of the implementations of the first aspect and the second aspect.

According to a sixth aspect, a computer program product including instructions is provided. When the instructions are run on a computer, the computer is enabled to perform the method according to any one of the implementations of the first aspect and the second aspect.

According to a seventh aspect, a data transmission method is provided, including: A first server obtains an address of a second server, where one of the first server and the second server is a source server serving a terminal device, and the other is a target server of the terminal device; the first server sends a message to a third network element, where the message includes the address of the second server and an address of the first server; and the third network element configures, based on the message, a fourth network element to replace an address of data transmission of the terminal device during the data transmission of the terminal device. The replacing an address of data transmission of the terminal device includes: replacing the address of the data transmission of the terminal device with an address of the target server from an address of the source server, where the data transmission of the terminal device is uplink transmission; and/or replacing the address of the data transmission of the terminal device with the address of the source server from the address of the target server, where the data transmission of the terminal device is downlink transmission. With reference to the seventh aspect, in some implementations of the seventh aspect, the fourth network element replaces the address of the data transmission of the terminal device with the address of the target server from the address of the source server, where the data transmission of the terminal device is the uplink transmission; and/or replaces the address of the data transmission of the terminal device with the address of the source server from the address of the target server, where the data transmission of the terminal device is the downlink transmission.

According to an eighth aspect, a data transmission method is provided, including: A first server sends a first message to a third network element; the third network element triggers, based on the first message, establishment of a connection between a terminal device and a target server of the terminal device; and the first server sends a second message to the terminal device, where the second message includes an address of the target server, and the address of the target server is for data transmission between the terminal device and the target server after the establishment of the connection; and the first server is a source server or the target server of the terminal device, and the terminal device has a dual-connectivity capability.

According to a ninth aspect, a data transmission method is provided, including: A first server sends a first message to a third network element, so that the third network element triggers establishment of a connection between a terminal device and a target server of the terminal device, where the first server is a source server or the target server of the terminal device, and the terminal device has a dual-connectivity capability; the first server sends a second message to the terminal device, where the second message includes an address of the target server; and the terminal device performs data transmission with the target server based on the address of the target server after the establishment of the connection.

According to a tenth aspect, a data transmission system is provided, including two apparatuses, for example, a first server and a third network element.

The first server is configured to obtain an address of a second server, where one of the first server and the second server is a source server serving a terminal device, and the other is a target server of the terminal device; the first server is further configured to send a message to the third network element, where the message includes the address of the second server and an address of the first server; and the third network element is configured to configure, based on the message, a fourth network element to replace an address of data transmission of the terminal device during the data transmission of the terminal device; and the replacing an address of data transmission of the terminal device includes: replacing the address of the data transmission of the terminal device with an address of the target server from an address of the source server, where the data transmission of the terminal device is uplink transmission; and/or replacing the address of the data transmission of the terminal device with the address of the source server from the address of the target server, where the data transmission of the terminal device is downlink transmission.

With reference to the tenth aspect, in some implementations of the tenth aspect, the system further includes the fourth network element, configured to:
replace the address of the data transmission of the terminal device with the address of the target server from the address of the source server, where the data transmission of the terminal device is the uplink transmission; and/or replace the address of the data transmission of the terminal device with the address of the source server from the address of the target server, where the data transmission of the terminal device is the downlink transmission.

According to an eleventh aspect, a data transmission system is provided, including two apparatuses, for example, a first server and a third network element.

The first server is configured to send a first message to the third network element; the third network element is configured to trigger, based on the first message, establishment of a connection between a terminal device and a target server of the terminal device; and the first server is further configured to send a second message to the terminal device, where the second message includes an address of the target server, and the address of the target server is for data transmission between the terminal device and the target server after the establishment of the connection; and the first server is a source server or the target server of the terminal device, and the terminal device has a dual-connectivity capability.

According to a twelfth aspect, a data transmission system is provided, including two apparatuses, for example, a first server and a terminal device.

The first server is configured to send a first message to a third network element, so that the third network element triggers establishment of a connection between the terminal device and a target server of the terminal device, where the first server is a source server or the target server of the terminal device, and the terminal device has a dual-connectivity capability; the first server is further configured to send a second message to the terminal device, where the second message includes an address of the target server; and the terminal device is configured to perform data transmission with the target server based on the address of the target server after the establishment of the connection.

According to a thirteenth aspect, a chip is provided. The chip includes a processor and a communication interface. The processor reads, through the communication interface, instructions stored in a memory, to perform any one of the foregoing methods. Optionally, in an implementation, the chip may further include the memory. The memory stores the instructions, the processor is configured to execute the instructions stored in the memory. When the instructions are executed, the processor is configured to perform any one of the foregoing methods.

### BRIEF DESCRIPTION OF DRAWINGS

FIG. 1 is a diagram of an SEALDD service architecture 100 to which an embodiment of this application is applicable;
FIG. 2 is a diagram of a network architecture according to an embodiment of this application;
FIG. 3 is a schematic flowchart of a data transmission method 300 according to an embodiment of this application;
FIG. 4 is a schematic flowchart of another data transmission method 400 according to an embodiment of this application;
FIG. 5 is a diagram of another network architecture according to an embodiment of this application;
FIG. 6 is a schematic flowchart of still another data transmission method 600 according to an embodiment of this application;
FIG. 7 is a schematic flowchart of still another data transmission method 700 according to an embodiment of this application;
FIG. 8 is a block diagram of a communication apparatus 800 according to an embodiment of this application;
FIG. 9 is a block diagram of another communication apparatus 900 according to an embodiment of this application; and
FIG. 10 is a diagram of a chip system 1000 according to an embodiment of this application.

### DESCRIPTION OF EMBODIMENTS

When a terminal device uses a vertical industry application, data transmission needs to be performed between a vertical application layer (vertical application layer, VAL) client (VAL client) running on the terminal device and a corresponding VAL server (VAL server). A service enabler architecture layer data delivery (service enabler architecture layer data delivery, SEALDD) client and an SEALDD server may provide a data transmission service for the VAL client and the VAL server.

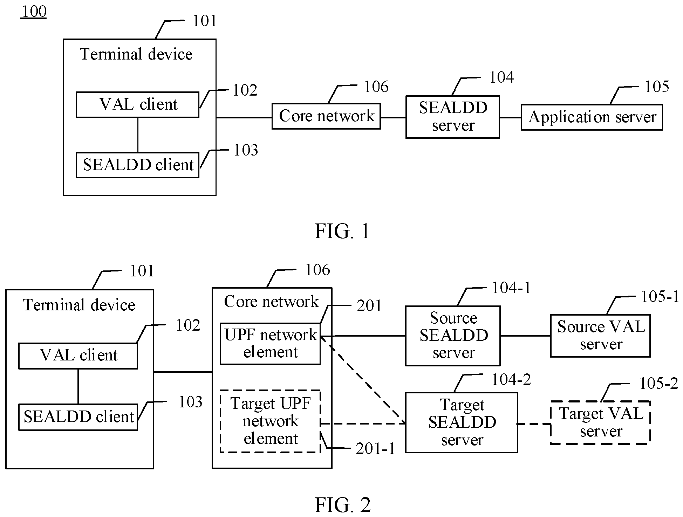

FIG. 1 is a diagram of an SEALDD service architecture 100 to which an embodiment of this application is applicable. A terminal device 101 includes a VAL client 102 and an SEALDD client 103. To be specific, the VAL client 102 and the SEALDD client 103 may be used as a part of the terminal device, and run on the terminal device in a form of software or a system component. An SEALDD server 104 may be independently deployed between the terminal device and a VAL server 105, or may be integrated into the VAL server. In the figure, an example in which the SEALDD server is independently deployed is used.

After a connection between the terminal device and the SEALDD server is established, to be specific, after the connection between the SEALDD client in the terminal device and the SEALDD server is established, the SEALDD client and the SEALDD server may perform data transmission over the connection, to provide a data transmission service for the VAL client and the VAL server. In other words, the SEALDD server may provide the data transmission service for the terminal device over the connection established between the SEALDD server and the terminal device. Specifically, for uplink data transmission in a direction from the VAL client to the VAL server, the VAL client may first send application data to the SEALDD client. After encapsulating the received application data, the SEALDD client sends the application data to the SEALDD server over the established connection, and then the SEALDD server parses the application data and sends the application data to the VAL server. For downlink data transmission in a direction from the VAL server to the VAL client, the VAL server may first send application data to the SEALDD server. After encapsulating the received application data, the SEALDD server sends the application data to the SEALDD client over the established connection, and then the SEALDD client parses the application data and sends the application data to the VAL server. The application data may be transmitted in a form of a data packet.

A data flow transmitted by the VAL client and the VAL server through the SEALDD client and the SEALDD server may be referred to as an SEALDD flow (SEALDD flow). The SEALDD client and the SEALDD server maintain information about the SEALDD flow, to identify the VAL client and the VAL server that correspond to the SEALDD flow. Specifically, when the SEALDD client receives a downlink SEALDD flow from the SEALDD server, the SEALDD client determines the corresponding VAL client based on the information about the SEALDD flow, and sends a data packet in the downlink SEALDD flow to the VAL client. Correspondingly, when the SEALDD server receives an uplink SEALDD flow from the SEALDD client, the SEALDD server determines the corresponding VAL server based on the information about the SEALDD flow, and sends a data packet in the uplink SEALDD flow to the VAL server. The information about the SEALDD flow may be an identifier (identifier, ID) of the SEALDD flow, or may be an ID of a VAL service provided by the corresponding VAL server and VAL client.

The service architecture 100 further includes a core network 106. The data transmission between the SEALDD client and the SEALDD server is borne on a user plane session established between the terminal device and the core network. The core network may be a 3rd generation partnership project (3rd generation partnership project, 3GPP) 5G core network (5G core network, 5GC), an evolved packet core (evolved packet core, EPC), or a core network in a future communication system. The following uses an example in which the core network is the 5GC for description.

The core network includes a network exposure function (network exposure function, NEF) network element, a policy control function (policy control function, PCF) network element, a session management function (session management function, SMF) network element, and a user plane function (user plane function, UPF) network element.

The NEF network element may enable a third-party server, for example, the SEALDD server, to use a service provided by the core network. The PCF network element may provide a policy rule for another network element in the core network, so that a behavior of a core network element complies with a unified policy framework. The SEALDD server may directly communicate with the PCF network element, or may communicate with the PCF network element through the NEF network element.

The UPF network element is configured to receive and forward data transmitted between the terminal device and the SEALDD server. Specifically, after the UPF network element establishes a user plane session with the terminal device, when receiving downlink data from the SEALDD server, and a destination address of the downlink data is an address of the terminal device, the UPF network element may forward the downlink data to the terminal device. Correspondingly, when receiving uplink data from the terminal device, and a destination address of the uplink data is an address of the SEALDD server, the UPF network element may forward the uplink data to the SEALDD server. The user plane session between the terminal device and the UPF network element may also be referred to as a protocol data unit (protocol data unit, PDU) session. The UPF network element configured to receive data from the SEALDD server and forward the data to the terminal device, or send, to the SEALDD server, data from the terminal device is referred to as a UPF network element connected to the SEALDD server, or a UPF network element corresponding to the SEALDD server. The UPF network element connected to/corresponding to the SEALDD server may be identified by using a data network access identifier (data network access identifier, DNAI), in other words, the UPF network element connected to/corresponding to the SEALDD server may be determined based on the DNAI.

The SMF network element is configured to: select the UPF network element, and trigger the terminal device to establish the user plane session with the selected UPF network element, so that the terminal device can perform data transmission with the SEALDD server through the UPF network element. In other words, a connection between the terminal device and the SEALDD server is established. The SMF network element is further configured to manage the user plane session between the terminal device and the UPF network element, for example, maintain, modify, and release the user plane session.

In some cases, for example, a location of the terminal device changes, or load of the SEALDD server changes, the SEALDD server that originally serves the terminal device may no longer be able to provide a data transmission service for the terminal device, or if the SEALDD server continues to provide a data transmission service for the terminal device, data transmission quality of the terminal device deteriorates. In the cases, the data transmission of the terminal device may be switched to another SEALDD server. The SEALDD server that serves the terminal device before the switching may be referred to as a source SEALDD server, and the SEALDD server that provides a data transmission service for the terminal device after the switching may be referred to as a target SEALDD server. How to switch the data transmission of the terminal device from the source SEALDD server to the target SEALDD server is a problem to be studied.

Embodiments of this application provide a data transmission method, apparatus, and system, to switch the data transmission of the terminal device from the source SEALDD server to the target SEALDD server, so that the data transmission quality of the terminal device can be improved. Embodiments of this application are applicable to a plurality of communication systems, including but not limited to a long term evolution (long term evolution, LTE) system, a fifth generation (fifth generation, 5G) new radio (new radio, NR) system, a system in LTE and 5G hybrid networking, a non-terrestrial network (non-terrestrial network, NTN) system, a device-to-device (device-to-device, D2D) communication system, a machine to machine (machine to machine, M2M) communication system, a wireless local area network (wireless local area network, WLAN), and the like. Embodiments of this application may be further applied to a future communication system, for example, a 6th generation (6th generation, 6G) mobile communication system.

The terminal device may be a device that has a wireless transceiver function or a chip or a chip system that may be disposed in the terminal device, and may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. For example, the terminal device may be a mobile phone (mobile phone), a tablet computer, a notebook computer, a palmtop computer, a mobile Internet device, a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), or another processing device connected to a wireless modem. The terminal device may be a terminal device in a fifth generation (fifth generation, 5G) new radio (new radio, NR) network, a terminal device in a future evolved public land mobile network (public land mobile network, PLMN), a terminal device in a next generation network (for example, a 6th generation (6th generation, 6G) mobile communication network), or the like. This is not limited in embodiments of this application. FIG. 2 is a diagram of a network architecture according to an embodiment of this application. A connection between a terminal device 101 and a source SEALDD server 104-1 has been established, and the terminal device and the source SEALDD server may perform data transmission over the established connection. In other words, a VAL client 102 in the terminal device may perform data transmission with a source VAL server 105-1 through an SEALDD client 103, a UPF network element 201 connected to the source SEALDD server, and the source SEALDD server, to use an application provided by the source VAL server, that is, use a service provided by the source VAL server.

When the terminal device moves, the source SEALDD server is overloaded, or the like, the source SEALDD server needs to switch the data transmission of the terminal device to a target SEALDD server 104-2. A UPF network element connected to each of the target SEALDD server and the source SEALDD server may be the UPF network element 201. Alternatively, a UPF network element connected to the target SEALDD server is a target UPF network element 201-1, and the UPF network element 201 is different from the target UPF network element 201-1. A target VAL server 105-2 is configured to provide a service for the terminal device after the data transmission of the terminal device is switched to the target SEALDD server. In other words, the target VAL server performs data transmission with the terminal device through the target SEALDD server. The target VAL server and the source VAL server may be the same. For example, when there is a connection between the target SEALDD server and the source VAL server, the target SEALDD server may select the source VAL server to continue to provide a service for the terminal device. Alternatively, the target VAL server and the source VAL server may be different, but a service provided by the target VAL server for the terminal device is the same as a service provided by the source VAL server for the terminal device.

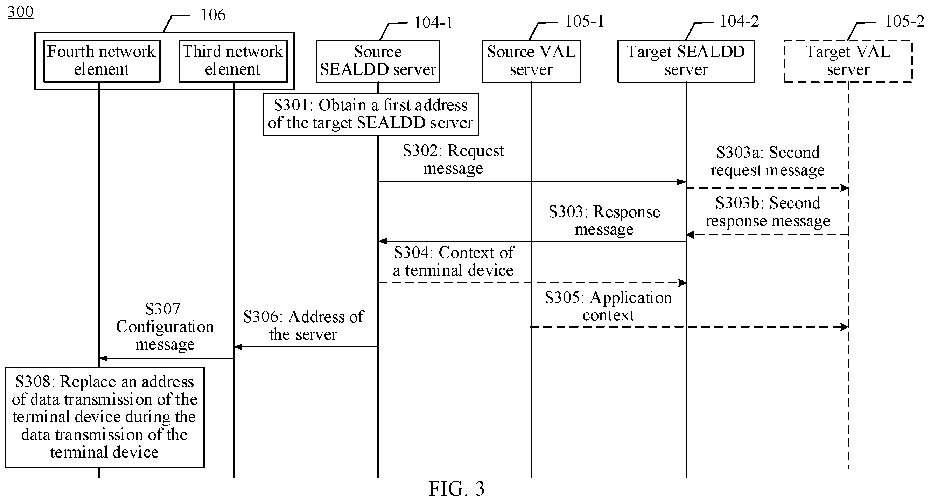

FIG. 3 is a schematic flowchart of a data transmission method 300 according to an embodiment of this application. The method may be applied to the network architecture shown in FIG. 2. As shown in FIG. 3, the method includes the following plurality of steps.

S301: A source SEALDD server obtains a first address of a target SEALDD server.

The first address of the target SEALDD server may be used for communicating with each functional entity or apparatus including the source SEALDD server, for example, used for sending/receiving a request message to/from the source SEALDD server. Optionally, the first address of the target SEALDD server is a network address such as an IP address of the target SEALDD server.

Optionally, the source SEALDD server further obtains a data network access identifier (data network access identifier, DNAI) corresponding to the target SEALDD server. The DNAI is for determining a UPF network element connected to the target SEALDD server.

A specific manner in which the source SEALDD server obtains the first address of the target SEALDD server is not limited in this embodiment of this application. For example, a source VAL server or a terminal device (for example, an SEALDD client) may send the first address of the target SEALDD server to the source SEALDD server. A specific manner in which the source SEALDD server obtains the DNAI corresponding to the target SEALDD server is also not limited in this embodiment of this application. For example, the source VAL server, the terminal device (for example, the SEALDD client), or a core network element (for example, an SMF network element) may send the DNAI corresponding to the target SEALDD server to the source SEALDD server.

A process in which the source SEALDD server obtains the first address of the target SEALDD server may be referred to as that the source SEALDD server discovers the target SEALDD server, or may be referred to as that the source SEALDD server selects the target SEALDD server. This is not limited in this embodiment of this application. For example, the source SEALDD server sends a discovery request message to the target SEALDD server, where the discovery request message is for requesting the first address of the target SEALDD server and the DNAI corresponding to the target SEALDD server. The target SEALDD server sends a discovery response message to the source SEALDD server based on the discovery request message. The discovery response message includes the first address of the target SEALDD server and the DNAI corresponding to the target SEALDD server.

S302: The source SEALDD server sends a request message to the target SEALDD server based on the first address of the target SEALDD server, where the request message is for requesting to switch data transmission of the terminal device to the target SEALDD server.

Optionally, the request message includes information about the terminal device, and the information about the terminal device may include one or more of the following information:
(1) an ID of the terminal device;
(2) information about the SEALDD client running on the terminal device; and
(3) information about an SEALDD flow transmitted by the terminal device through the source SEALDD server.

For example, the ID of the terminal device may include a generic public subscription identifier (generic public subscription identifier, GPSI) or a subscription permanent identifier (subscription permanent identifier, SUPI).

Specifically, the information about the SEALDD client running on the terminal device may include an ID and/or address information of the SEALDD client. The address information of the SEALDD client may be a network address such as an IP address. Optionally, when a plurality of SEALDD clients run on the terminal device, the request message includes information about the plurality of SEALDD clients.

Specifically, the information about the SEALDD flow transmitted by the terminal device through the source SEALDD server may be an ID of the SEALDD flow. Optionally, the terminal device includes one or more VAL clients. Correspondingly, the request message includes the information about the SEALDD flow transmitted by the one or more VAL clients through the source SEALDD server.

Optionally, the request message further includes information about the source VAL server and/or VAL service information, which are/is used by the target SEALDD server to select a target VAL server. The information about the source VAL server may include an ID and/or address information of the source VAL server, and the address information of the source VAL server may be a network address such as an IP address. The VAL service information may be an ID for uniquely identifying a VAL service.

Optionally, the request message further includes second indication information, and the second indication information indicates to switch the data transmission of the terminal device to the target SEALDD server by replacing an address of the data transmission of the terminal device.

Optionally, that the request message is for requesting to switch the data transmission of the terminal device to the target SEALDD server may also be that the request message is for requesting the target SEALDD server to allocate an address to the data transmission of the terminal device. S303: The target SEALDD server sends a response message to the source SEALDD server based on the request message.

The response message may include a second address of the target SEALDD server. For example, the second address of the target SEALDD server includes a second IP address of the target SEALDD server, and may further include a second port number of the target SEALDD server. The second address of the target SEALDD server may be the same as or different from the first address of the target SEALDD server. For example, the target SEALDD server may allocate, to the data transmission of the terminal device, a new address as the second address of the target SEALDD server. In other words, before the target SEALDD server sends the response message to the source SEALDD server, the target SEALDD server may further allocate the second address of the target SEALDD server to the data transmission of the terminal device. When the response message includes the second address of the target SEALDD server, it can be considered that the target SEALDD server accepts a request for switching the data transmission of the terminal device to the target SEALDD server.

Alternatively, the response message indicates that the target SEALDD server does not accept a request for switching the data transmission of the terminal device to the target SEALDD server. For example, the response message is a negative acknowledgment (negative acknowledgment, NACK). Optionally, the response message further includes a reason why the target SEALDD server does not accept the request.

Optionally, the target SEALDD server determines, based on the request message, whether to accept the request for switching the data transmission of the terminal device to the target SEALDD server. When the request is accepted, the target SEALDD server sends the response message to the source SEALDD server, where the response message includes the second address of the target SEALDD server. When the request is not accepted, the target SEALDD server sends the response message to the source SEALDD server, indicating that the request is not accepted.

The target SEALDD server may further select the target VAL server based on the request message. The target VAL server is the same as the source VAL server, or the target VAL server is different from the source VAL server, but the target VAL server can provide, for the terminal device, a service that is the same as a service provided by the source VAL server for the terminal device. The target SEALDD server may include information about the selected target VAL server in the response message, for example, the information about the target VAL server.

A specific implementation in which the target SEALDD server selects the target VAL server is not limited in this embodiment of this application. For example, when the request message includes the information about the source VAL server and/or the VAL service information, the target SEALDD server may determine, based on the information about the source VAL server and/or the VAL service information, the service provided by the source VAL server for the terminal device, and then select, as the target VAL server, a VAL server that can provide the same service for the terminal device.

In a possible implementation, after the target SEALDD server selects the target VAL server, when the target VAL server is different from the source VAL server, the method 300 further includes the following steps S303a and S303b.

S303a: The target SEALDD server sends a second request message to the target VAL server, where the second request message is for requesting to switch the service of the terminal device to the target VAL server.

Optionally, when the request message includes the information about the source VAL server and/or the VAL service information, the second request message may include the information about the source VAL server and/or the VAL service information, and is used by the target VAL server to determine whether to accept a request for switching the service of the terminal device to the target VAL server.

S303b: The target VAL server sends a second response message to the target SEALDD server based on the second request message, where the second response message indicates whether the target VAL server accepts the request for switching the service of the terminal device to the target VAL server.

Specifically, the target VAL server determines, based on the second request message, whether to accept the request for switching the service of the terminal device to the target VAL server, and sends the second response message to the target SEALDD server based on a determining result. For example, when the target VAL server accepts the request, the second response message is an acknowledgment (acknowledgment, ACK). When the target VAL server does not accept the request, the second response message is a NACK.

A specific implementation in which the target VAL server determines, based on the second request message, whether to accept the request is not limited in this embodiment of this application. For example, the target VAL server may determine, based on the information about the source VAL server and/or the VAL service information in the second request message, whether to accept the request. For another example, the target VAL server may determine, based on a local load status, whether to accept the request.

In this manner, when the second response message indicates that the target VAL server does not accept the request for switching the service of the terminal device to the target VAL server, the target SEALDD server determines not to accept the request for switching the data transmission of the terminal device to the target SEALDD server. At least when the second response message indicates that the target VAL server accepts the request for switching the service of the terminal device to the target VAL server, the target SEALDD server determines to accept the request for switching the data transmission of the terminal device to the target SEALDD server.

S304: The source SEALDD server sends a context of the terminal device to the target SEALDD server, where the context of the terminal device includes information about the data transmission between the source SEALDD server and the terminal device.

Optionally, the source SEALDD server sends the context of the terminal device to the target SEALDD server based on the response message. Specifically, when the response message includes the second address of the target SEALDD server, the source SEALDD server sends the context of the terminal device to the target SEALDD server. When the response message indicates that the request for switching the data transmission of the terminal device to the target SEALDD server is not accepted, the source SEALDD server may end this switching procedure.

Optionally, when the target SEALDD server determines to accept the request for switching the data transmission of the terminal device to the target SEALDD server, the target SEALDD server sends a third request message to the source SEALDD server, to request the source SEALDD server to send the context of the terminal device. The source SEALDD server sends the context of the terminal device to the target SEALDD server based on the third request message.

A sequence of sending, to the source SEALDD server, the third request message and the response message by the target SEALDD server is not limited in this embodiment of this application. To be specific, when the target SEALDD server determines to accept the request for switching the data transmission of the terminal device to the target SEALDD server, the target SEALDD server may first send the response message and then send the third request message, or may first send the third request message and then send the response message, or may simultaneously send the response message and the third request message. When the target SEALDD server simultaneously sends the response message and the third request message, the response message and the third request message may be a same message, or may be different messages.

Optionally, the source SEALDD server may send the context of the terminal device to the target SEALDD server via a plurality of messages.

When the request message includes information about one or more SEALDD clients, the context of the terminal device that is sent by the source SEALDD server to the target SEALDD server is specifically information about data transmission between each of the one or more SEALDD clients and the source SEALDD server. When the request message includes information about one or more SEALDD flows, the context of the terminal device that is sent by the source SEALDD server to the target SEALDD server is specifically transmission information of the one or more SEALDD flows.

Optionally, one or more messages of the context of the terminal device that are sent by the source SEALDD server to the target SEALDD server include information about an SEALDD flow corresponding to the context. The one or more messages sent by the source SEALDD server may further include information about a terminal user and/or the information about the one or more SEALDD clients running on the terminal device.

The context of the terminal device may include one or more of the following: a transport layer protocol used for data transmission, a sequence number of a currently transmitted data packet, a retransmission status of the data packet, and a source address and a destination address of the data packet. A currently used transport layer protocol may be a transmission control protocol (transmission control protocol, TCP), a user datagram protocol (user datagram protocol, UDP), or the like. The context of the terminal device may also be referred to as a transport layer context. The target SEALDD server can provide a data transmission service for the terminal device based on the context of the terminal device. For example, the target SEALDD server may determine, based on the sequence number of the data packet and/or the retransmission status of the data packet, whether data is lost. If downlink data is lost, the target SEALDD server may request the VAL server to resend the lost data to the terminal device. If uplink data is lost, the target SEALDD server may request the terminal device to resend the lost data to the VAL server. For another example, the target SEALDD server may determine, according to the transport layer protocol used for data transmission, a manner of encapsulating an uplink data packet or a downlink data packet. In this way, the target SEALDD server can provide a higher-quality data transmission service for the terminal device based on the context of the terminal device.

It should be noted that, in the foregoing descriptions of step S304, it is assumed that the request message in step S302 does not include the context of the terminal device. Optionally, the request message of the source SEALDD server includes the information about the SEALDD flow and a corresponding partial or entire context. When the second request message includes the entire context corresponding to the SEALDD flow, step S304 may be omitted. When the second request message includes the partial context corresponding to the SEALDD flow, the source SEALDD server may send the remaining context to the target SEALDD server in step S304.

Optionally, the method 300 further includes the following step S305.

S305: The source VAL server sends an application context to the target VAL server, where this application is an application provided by the source VAL server for the terminal device. Specifically, the source VAL server may send the application context to the target VAL server by using one of the following implementations 1.1 to 1.4.
**Manner 1.1:** After the target SEALDD server determines to accept the request for switching the data transmission of the terminal device to the target SEALDD server, when the selected target VAL server is different from the source VAL server, the target SEALDD server triggers the target VAL server to send a fourth request message to the source VAL server, to request the source VAL server to send the application context. Correspondingly, the source VAL server sends the application context to the target VAL server based on the fourth request message.
**Manner 1.2:** When the target VAL server determines to accept the request for switching the service of the terminal device to the target VAL server in step 503b, the target VAL server sends a fourth request message to the source VAL server, to request the source VAL server to send the application context. Correspondingly, the source VAL server sends the application context to the target VAL server based on the fourth request message.
**Manner 1.3:** When the response message includes the second address of the target SEALDD server and information about the target SEALDD server, the source SEALDD server determines, based on the information about the target SEALDD server, whether the target SEALDD server is the same as the source SEALDD server. When the target SEALDD server is different from the source SEALDD server, the source SEALDD server triggers the source VAL server to send the application context to the target VAL server.
**Manner 1.4:** After step S304, the source SEALDD server determines, based on information about the target SEALDD server in the response message, whether the target SEALDD server is the same as the source SEALDD server. When the target SEALDD server is different from the source SEALDD server, the source SEALDD server triggers the source VAL server to send the application context to the target VAL server. Specifically, the source VAL server may directly or indirectly send the application context to the target VAL server. For example, the source VAL server indirectly sends the application context to the target VAL server through the source SEALDD server and the target SEALDD server.

Optionally, the source VAL server may send the application context to the target VAL server via a plurality of messages.

The application context may include a specific execution situation of an application program. For example, when the application program is a video application, the application context may be a number of a currently played video frame, a resolution of a video, or the like.

Correspondingly, the target VAL server receives the application context, and may provide a service for the terminal device based on the application context, for example, provide the service for the terminal device in a same application service manner as the source VAL server, to ensure that the service used by the terminal device is continuous and is not affected by a change of the VAL server. S306: The source SEALDD server sends a message to a third network element, where the message includes an address of the source SEALDD server and the second address of the target SEALDD server.

The address of the source SEALDD server is an address used for data transmission between the terminal device and the source SEALDD server, may include an IP address of the source SEALDD server, and may further include a port number of the source SEALDD server.

Optionally, the message further includes indication information, and the indication information indicates to replace the address of the data transmission of the terminal device.

Optionally, the message further includes the DNAI corresponding to the target SEALDD server, to be specific, the DNAI corresponding to the target SEALDD server that is obtained by the source SEALDD server in step S301.

The third network element may be a PCF network element. The source SEALDD server may directly send the message to the PCF network element, or may send the message to the PCF network element through an NEF network element.

Optionally, the message is an application function (application function, AF) request message.

It should be noted that an execution sequence of step S306 and step S304 is not limited in this embodiment of this application. In other words, the source SEALDD server may perform step S306 after step S304 is completed. In this way, the target SEALDD server can provide the data transmission service for the terminal device based on the context of the terminal device, to better ensure continuity of the data transmission. Alternatively, the source SEALDD server may perform step S306 before step S304, or perform steps S304 and S306 at the same time. In this way, the data transmission of the terminal device can be switched to the target SEALDD server more quickly. S307: The third network element sends a configuration message to a fourth network element based on the message from the source SEALDD server, to configure the fourth network element to replace the address of the data transmission of the terminal device during the data transmission of the terminal device.

Optionally, the third network element is the PCF network element, the fourth network element is a target UPF network element corresponding to the target SEALDD server, and the PCF network element configures the target UPF network element through the SMF network element. In this manner, step S307 specifically includes the following steps S307a and S307b (not shown in the figure).

S307a: The PCF network element sends policy information to the SMF network element based on the message from the source SEALDD server, where the policy information includes the address of the source SEALDD server and the second address of the target SEALDD server, and the policy information is for enabling the SMF network element to configure the UPF network element to replace the address of the data transmission of the terminal device during the data transmission of the terminal device.

That the policy information is for enabling the SMF network element to configure the UPF network element may be understood as that the policy information is for triggering the SMF network element to configure the UPF network element, or may be understood as that the SMF configures the UPF network element based on the policy information.

Optionally, the policy information includes fourth indication information, and the fourth indication information indicates the SMF network element to configure the UPF network element to replace the address of the data transmission of the terminal device during the data transmission of the terminal device.

Optionally, the policy information is a policy and charging control (policy and charging control, PCC) rule.

Optionally, when the message from the source SEALDD server includes the DNAI corresponding to the target SEALDD server, the policy information includes the DNAI.

S307b: The SMF network element sends a configuration message to the target UPF network element based on the policy information from the PCF network element, to configure the target UPF network element to replace the address of the data transmission of the terminal device during the data transmission of the terminal device.

The configuration message includes the address of the source SEALDD server and the second address of the target SEALDD server, and may further include the indication information that indicates the UPF network element to replace the address of the data transmission of the terminal device during the data transmission of the terminal device.

When the policy information does not include the DNAI corresponding to the target SEALDD server, the target UPF network element may be a UPF network element connected to the source SEALDD server. In other words, the target SEALDD server and the source SEALDD server are connected to the same UPF network element. When the policy information includes the DNAI corresponding to the target SEALDD server, the target UPF network element is a UPF network element corresponding to the DNAI. In other words, the SMF may determine, based on the DNAI, a target UPF network element connected to the target SEALDD server. The UPF network element corresponding to the DNAI may be the same as or different from the UPF network element connected to the source SEALDD server. When the UPF network element corresponding to the DNAI is different from the UPF network element connected to the source SEALDD server, the SMF network element triggers the terminal device to establish a connection to the target UPF network element, and sends the configuration message to the target UPF network element.

S308: The fourth network element replaces the address of the data transmission of the terminal device during the data transmission of the terminal device based on the configuration message. Specifically, when the fourth network element receives the uplink data from the terminal device, the fourth network element replaces a destination address of the uplink data with the second address of the target SEALDD server from the address of the source SEALDD server. When the fourth network element receives downlink data from the target SEALDD server, the fourth network element replaces a source address of the downlink data with the address of the source SEALDD server from the second address of the target SEALDD server.

Based on the foregoing method, when the data transmission of the terminal device needs to be switched from the source SEALDD server to the target SEALDD server, the source SEALDD server obtains the second address of the target SEALDD server, and sends the address of the source SEALDD server and the second address of the target SEALDD server to the third network element, so that the third network element may configure the fourth network element to replace the address of the data transmission of the terminal device during the data transmission of the terminal device. In this way, the data transmission of the terminal device is switched from the source SEALDD server to the target SEALDD server when switching is not sensed by the terminal device. This improves data transmission quality of the terminal device.

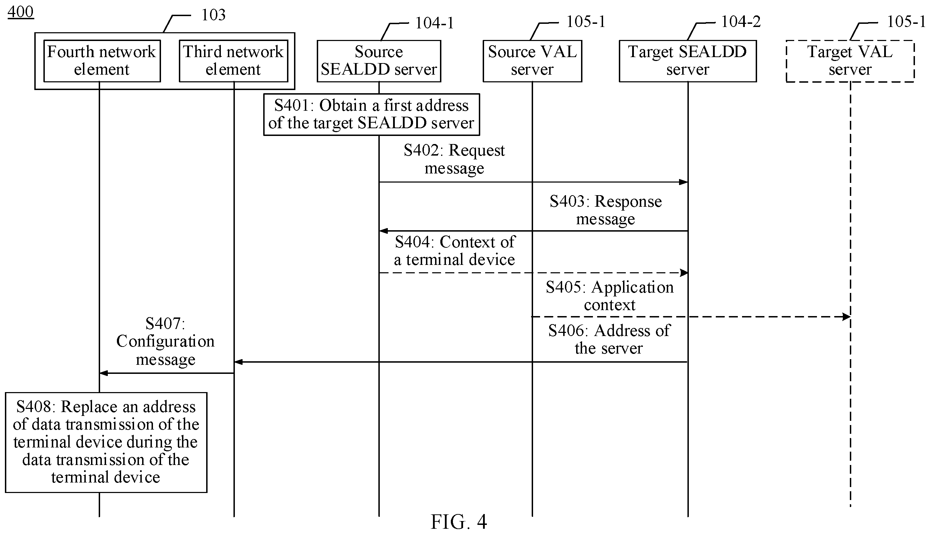

FIG. 4 is a schematic flowchart of another data transmission method 400 according to an embodiment of this application. The method may be applied to the network architecture shown in FIG. 2. The method 400 is similar to the method 300, but a difference lies in that in the method 400, a target SEALDD server obtains an address of a source SEALDD server, and sends the address of the source SEALDD server and a second address of the target SEALDD server to a third network element, so that the third network element configures a fourth network element to replace an address of data transmission of a terminal device during the data transmission of the terminal device. As shown in FIG. 4, the method includes the following plurality of steps.

S401: The source SEALDD server obtains a first address of the target SEALDD server. Optionally, the source SEALDD server further obtains a DNAI corresponding to the target SEALDD server.

A process in which the source SEALDD server obtains the first address of the target SEALDD server may be referred to as that the source SEALDD server discovers the target SEALDD server, or may be referred to as that the source SEALDD server selects the target SEALDD server. This is not limited in this embodiment of this application.

S402: The source SEALDD server sends a request message to the target SEALDD server based on the first address of the target SEALDD server, where the request message is for requesting to switch the data transmission of the terminal device to the target SEALDD server, and the request message includes the address of the source SEALDD server.

Optionally, the request message further includes information about the terminal device.

The address of the source SEALDD server is an address used for data transmission between the source SEALDD server and the terminal device, includes an IP address of the source SEALDD server, and may further include a port number of the source SEALDD server.

For specific details of steps S401 and S402, refer to steps S301 and S302. Details are not described herein again.

S403: The target SEALDD server sends a response message to the source SEALDD server based on the request message, where the response message indicates whether the target SEALDD server accepts a request for switching the data transmission of the terminal device to the target SEALDD server.

For example, when the target SEALDD server accepts the request, the response message is an ACK; or when the target SEALDD server does not accept the request, the response message is a NACK.

Specifically, the target SEALDD server makes a decision, based on the request message, on the request of switching the data transmission of the terminal device to the target SEALDD server, and sends the response message to the source SEALDD server based on a determining result. For a specific implementation in which the target SEALDD server determines, based on the request message, whether the request is accepted, refer to step S303. Details are not described herein again. S404: The source SEALDD server sends a context of the terminal device to the target SEALDD server, where the context of the terminal device includes information about the data transmission between the source SEALDD server and the terminal device.

Optionally, the method 400 further includes the following step S405.

S405: A source VAL server sends an application context to a target VAL server, where this application is an application provided by the source VAL server for the terminal device.

S406: The target SEALDD server sends a message to the third network element, where the message includes the address of the source SEALDD server and the second address of the target SEALDD server.

The second address of the target SEALDD server may be the same as or different from the first address of the target SEALDD server. For example, the target SEALDD server may allocate a new address to the data transmission of the terminal device. In this manner, before sending the message to the third network element, the target SEALDD server further allocates the second address of the target SEALDD server to the data transmission of the terminal device.

S407: The third network element sends a configuration message to the fourth network element based on the message from the target SEALDD server, to configure the fourth network element to replace the address of the data transmission of the terminal device during the data transmission of the terminal device.

S408: The fourth network element replaces the address of the data transmission of the terminal device during the data transmission of the terminal device based on the configuration message. For other implementation details of steps S404 to S408, refer to steps S304 to S308. Details are not described herein again.

Based on the foregoing method, when the data transmission of the terminal device needs to be switched from the source SEALDD server to the target SEALDD server, the target SEALDD server obtains the address of the source SEALDD server, and sends the address of the source SEALDD server and the second address of the target SEALDD server to the third network element, so that the third network element may configure the fourth network element to replace the address of the data transmission of the terminal device during the data transmission of the terminal device. In this way, the data transmission of the terminal device can be switched from the source SEALDD server to the target SEALDD server when switching is not sensed by the terminal device. This improves data transmission quality of the terminal device.

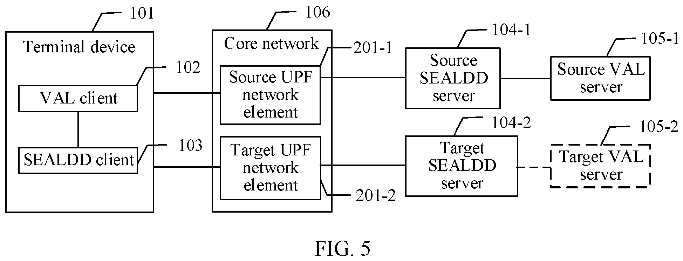

FIG. 5 is a diagram of another network architecture according to an embodiment of this application. A connection between a terminal device 101 and a source SEALDD server 104-1 has been established, and the terminal device and the source SEALDD server may perform data transmission over the established connection. In other words, a VAL client 102 in the terminal device may perform data transmission with a source VAL server 105-1 through an SEALDD client 103, a source UPF network element 201-1 connected to the source SEALDD server, and the source SEALDD server, to use an application provided by the source VAL server, that is, use a service provided by the source VAL server.

When the terminal device moves, the source SEALDD server is overloaded, or the like, the source SEALDD server needs to switch the data transmission of the terminal device to a target SEALDD server 104-2. A UPF network element connected to the target SEALDD server is a target UPF network element 201-2. A target VAL server 105-2 is configured to provide a service for the terminal device after the data transmission of the terminal device is switched to the target SEALDD server. In other words, the target VAL server performs data transmission with the terminal device through the target SEALDD server. The target VAL server and the source VAL server may be the same. For example, when there is a connection between the target SEALDD server and the source VAL server, the target SEALDD server may select the source VAL server to continue to provide the service for the terminal device. Alternatively, the target VAL server and the source VAL server may be different, but the service provided by the target VAL server for the terminal device is the same as the service provided by the source VAL server for the terminal device.

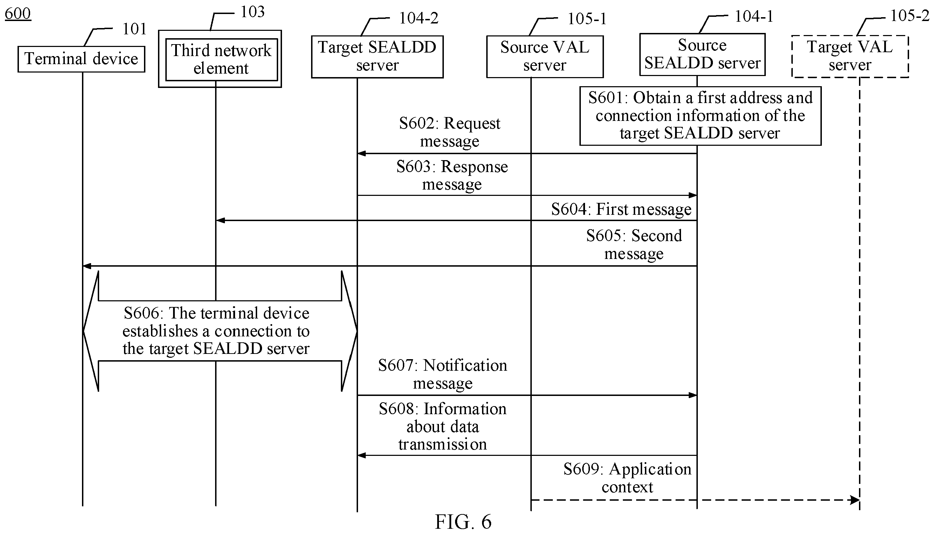

FIG. 6 is a schematic flowchart of still another data transmission method 600 according to an embodiment of this application. The method includes the following plurality of steps.

S601: A source SEALDD server obtains a first address and connection information of a target SEALDD server.

The first address of the target SEALDD server may be used for communicating with each functional entity or apparatus including the source SEALDD server, for example, used for sending/receiving a request message to/from the source SEALDD server. Optionally, the first address of the target SEALDD server is a network address such as an IP address of the target SEALDD server. The connection information is for establishing a connection between the terminal device and the target SEALDD server. For example, the connection information is a DNAI corresponding to the target SEALDD server, and the DNAI identifies a target UPF network element connected to the target SEALDD server. In this example, the connection information is specifically for establishing a PDU session between the terminal device and the target UPF network element.

A specific implementation in which the source SEALDD server obtains the first address and the connection information of the target SEALDD server is not limited in this embodiment of this application. For an example of an implementation, refer to step S301. Details are not described herein again.

A process in which the source SEALDD server obtains the first address of the target SEALDD server may be referred to as that the source SEALDD server discovers the target SEALDD server, or may be referred to as that the source SEALDD server selects the target SEALDD server. This is not limited in this embodiment of this application.

S602: The source SEALDD server sends a request message to the target SEALDD server based on the first address of the target SEALDD server, where the request message is for requesting the target SEALDD server to provide a data transmission service for the terminal device.

The request message may include one or more of the following information:
(1) an ID of the terminal device;
(2) information about an SEALDD client running on the terminal device; and
(3) first SEALDD flow identifier information of an SEALDD flow transmitted by the terminal device through the source SEALDD server.

For example, the ID of the terminal device may include a universal GPSI or an SUPI. Specifically, the information about the SEALDD client running on the terminal device may include an ID and/or address information of the SEALDD client. The address information of the SEALDD client may be a network address such as an IP address. Optionally, when the terminal device includes a plurality of SEALDD clients, the request message includes information about the plurality of SEALDD clients.

Specifically, the first SEALDD flow identifier information of the SEALDD flow transmitted by the terminal device through the source SEALDD server may be an ID of the SEALDD flow. Optionally, the terminal device includes one or more VAL clients. Correspondingly, the request message includes first SEALDD flow identifier information of the SEALDD flow transmitted by the one or more VAL clients through the source SEALDD server.

Optionally, the request message further includes information about a source VAL server and/or VAL service information, which are/is used by the target SEALDD server to select a target VAL server. The information about the source VAL server includes an ID and/or address information of the source VAL server. For example, the address information of the source VAL server may be a network address such as an IP address. The VAL service information may be an ID for uniquely identifying a VAL service.

Optionally, the request message further includes first information, indicating that the target SEALDD server is required to have a dual-connectivity capability. That the target SEALDD server has the dual-connectivity capability means that the target SEALDD server can process, based on information about data transmission from the source SEALDD server after establishing the connection to the terminal device, data transmitted between the terminal device and the target SEALDD server, to improve data transmission quality, for example, ensure that the data is not lost. Whether the SEALDD server has the dual-connectivity capability may be a functional attribute of the SEALDD server. For example, when the SEALDD server goes online, a network management entity configures whether the SEALDD server has the dual-connectivity capability. This is not specifically limited in this embodiment of this application.

Optionally, the request message is for requesting the target SEALDD server to provide the data transmission service for the terminal device. In other words, the request message is for requesting to switch data transmission of the terminal device to the target SEALDD server, or the request message is for requesting the target SEALDD server to allocate an address to the data transmission of the terminal device.

S603: The target SEALDD server sends a response message to the source SEALDD server based on the request message.

Optionally, the response message includes a second address of the target SEALDD server, and the second address of the target SEALDD server includes a second IP address of the target SEALDD server, and may further include a second port number of the target SEALDD server. The second address of the target SEALDD server may be the same as or different from the first address of the target SEALDD server. For example, the target SEALDD server may allocate a new address to the data transmission of the terminal device. In other words, before the target SEALDD server sends the response message to the source SEALDD server, the target SEALDD server may further allocate the second address of the target SEALDD server to the data transmission of the terminal device. When the response message includes the second address of the target SEALDD server, it indicates that the target SEALDD server accepts a request for switching the data transmission of the terminal device to the target SEALDD server.

Alternatively, the response message indicates that the target SEALDD server does not accept the request for providing the data transmission service for the terminal device. For example, the response message is a NACK. Optionally, the response message further includes a reason why the target SEALDD server does not accept the request.

Optionally, the target SEALDD server determines, based on the request message, whether to accept the request for providing the data transmission service for the terminal device. When the request is accepted, the target SEALDD server sends the response message to the source SEALDD server, where the response message includes the second address of the target SEALDD server. When the request is not accepted, the target SEALDD server sends, to the source SEALDD server, the response message indicating that the request is not accepted.

For other implementation details of step S603, refer to step S303. Details are not described herein again.

S604: The source SEALDD server sends a first message to a third network element based on the response message.

Specifically, when the response message includes the second address of the target SEALDD server, the source SEALDD server sends the first message to the third network element.

The first message is for enabling the third network element to trigger establishment of the connection between the terminal device and the target SEALDD server.

Optionally, the first message includes the connection information for establishing the connection between the terminal device and the target SEALDD server. For example, the connection information is the DNAI corresponding to the target SEALDD server, and the DNAI identifies the target UPF network element connected to the target SEALDD server.

The first message is for enabling the third network element to trigger the establishment of the connection between the terminal device and the target SEALDD server. Specifically, when the connection information is the DNAI corresponding to the target SEALDD server, the first message is for enabling the third network element to trigger establishment of the PDU session between the terminal device and the target UPF network element.

Optionally, the first message further includes first information, indicating that a connection between the terminal device and the source SEALDD server and the connection between the terminal device and the target SEALDD server need to be maintained simultaneously. Alternatively, the first information indicates that a connection between the terminal device and a source UPF network element and a connection between the terminal device and the target UPF network element need to be maintained simultaneously.

The third network element may be a PCF network element. The source SEALDD server may directly send the message to the PCF network element, or may send the message to the PCF network element through an NEF network element.

Optionally, the first message is an AF request.

S605: The source SEALDD server sends a second message to the terminal device based on the response message, where the second message includes the second address of the target SEALDD server.

Specifically, when the response message includes the second address of the target SEALDD server, the source SEALDD server sends the second address of the target SEALDD server to the terminal device, so that the terminal device may set, as the second address of the target SEALDD server, a destination address of the data sent to the target SEALDD server.

S606: The terminal device establishes the connection to the target SEALDD server based on the first message.

For example, when the third network element is the PCF network element, that the terminal device establishes the connection to the target SEALDD server under impact of the first message may include the following steps S606a and S606b (not shown in the figure).

S606a: The PCF network element sends policy information to an SMF network element based on the first message, so that the SMF network element triggers the establishment of the connection between the terminal device and the target SEALDD server, and the SMF network element maintains the connection between the terminal device and the source SEALDD server and the connection between the terminal device and the target SEALDD server simultaneously.

The policy information includes the connection information, and is for establishing the connection between the terminal device and the target SEALDD server. For example, the connection information is the DNAI corresponding to the target SEALDD server.

The policy information may further include first indication information, indicating the SMF network element to maintain the connection between the terminal device and the source SEALDD server and the connection between the terminal device and the target SEALDD server simultaneously.

Optionally, the policy information is a policy and charging control (policy and charging control, PCC) rule.

S606b: The SMF network element triggers the establishment of the connection between the terminal device and the target SEALDD server.

For example, when the connection information is the DNAI corresponding to the target SEALDD server, the SMF determines, based on the DNAI, the target UPF network element connected to the target SEALDD server, and triggers establishment of a protocol data unit (protocol data unit, PDU) session between the terminal device and the target UPF network element. In this way, when the target UPF network element receives uplink data from the terminal device, and a destination address of the data is the second address of the target SEALDD server, the target UPF network element may send the uplink data to the target SEALDD server. Correspondingly, when the target UPF network element receives downlink data from the target SEALDD server, and a destination address of the data is an address of the terminal device, the target UPF network element may send the downlink data to the terminal device, so that the connection between the terminal device and the target SEALDD server is established.

In a process of establishing the connection between the terminal device and the target SEALDD server, the terminal device allocates second SEALDD flow identifier information to an SEALDD flow sent by the terminal device through the target SEALDD server. When a plurality of VAL clients run on the terminal device, the terminal device allocates second SEALDD flow identifier information to an SEALDD flow sent by each VAL client through the target SEALDD server.

It should be noted that an execution sequence of S605 and S606 is not limited in this embodiment of this application.

S607: The target SEALDD server sends a notification message to the source SEALDD server, to notify that the connection between the terminal device and the target SEALDD server has been established.

For example, after receiving a data packet from the terminal device, the target SEALDD server sends the notification message to the source SEALDD server.

The notification message includes information about the terminal device, and/or the first SEALDD flow identifier information of the SEALDD flow sent by the terminal device through the source SEALDD server.

S608: The source SEALDD server sends the information about the data transmission to the target SEALDD server.

Specifically, the source SEALDD server determines, based on the information about the terminal device in the notification message, the SEALDD flow sent by the terminal device through the source SEALDD server, or the source SEALDD server determines, based on the first SEALDD flow identifier information in the notification message, the SEALDD flow sent by the terminal device through the source SEALDD server, and then sends, to the target SEALDD server, the information that is about the data transmission and that corresponds to the SEALDD flow.

For example, the information about the data transmission may include one or more of the following: a transport layer protocol used for data transmission, a sequence number of a currently transmitted data packet, a retransmission status of the data packet, a destination IP address or port information of the data packet, a source address and a destination address of the data packet, and a source IP address or port information of the data packet. The transport layer protocol used for data transmission may be a TCP, a UDP, or the like. The information about the data transmission may also be referred to as a context of the terminal device, or a transmission context of the terminal device.

The information about the data transmission is used for data transmission between the terminal device and the target SEALDD server. In other words, the target SEALDD server may process, based on the information about the data transmission, the data transmitted between the terminal device and the target SEALDD server. For example, the target SEALDD server may determine, based on the sequence number of the data packet and/or the retransmission status of the data packet, whether the data is lost. If downlink data is lost, the target SEALDD server may request the VAL server to resend the lost data to the terminal device. If the uplink data is lost, the target SEALDD server may request the terminal device to resend the lost data to the VAL server. For another example, the target SEALDD server may determine, according to the transport layer protocol used for data transmission, a manner of encapsulating an uplink data packet or a downlink data packet. Optionally, the method 600 further includes step S609.

S609: The source VAL server sends an application context to the target VAL server, where this application is an application provided by the source VAL server for the terminal device. Specifically, the source VAL server may send the application context to the target VAL server by using one of the following implementations 2.1 to 2.4.
**Manner 2.1:** After the target SEALDD server determines to accept the request for switching the data transmission of the terminal device to the target SEALDD server, when the target VAL server selected by the target SEALDD server is different from the source VAL server, the target SEALDD server triggers the target VAL server to send a fifth request message to the source VAL server, to request the source VAL server to send the application context. Correspondingly, the source VAL server sends the application context to the target VAL server based on the fifth request message. **Manner 2.2:** When the target SEALDD server requests the target VAL server to provide a service for the terminal device in step S603, and the target VAL server determines to receive a request for providing the service for the terminal device, the target VAL server sends a fifth request message to the source VAL server, to request the source VAL server to send the application context. Correspondingly, the source VAL server sends the application context to the target VAL server based on the fifth request message.
**Manner 2.3:** When the source SEALDD server receives the response message in step S603, where the response message indicates that the request for switching the data transmission of the terminal device to the target SEALDD server is accepted, and the response message includes information about the target VAL server, the source SEALDD server determines, based on information about the target SEALDD server, whether the target SEALDD server is the same as the source SEALDD server. When the target SEALDD server is different from the source SEALDD server, the source SEALDD server triggers the source VAL server to send the application context to the target VAL server.
**Manner 2.4:** After step S608, the source SEALDD server determines, based on information about the target SEALDD server in the response message, whether the target SEALDD server is the same as the source SEALDD server. When the target SEALDD server is different from the source SEALDD server, the source SEALDD server triggers the source VAL server to send the application context to the target VAL server.

Specifically, the source VAL server may directly or indirectly send the application context to the target VAL server. For example, the source VAL server indirectly sends the application context to the target VAL server through the source SEALDD server and the target SEALDD server. Optionally, the source VAL server may send the application context to the target VAL server via a plurality of messages.

The application context may include a specific execution situation of an application program. For example, when the application program is a video application, the application context may be a number of a currently played video frame, a resolution of a video, or the like.

Optionally, the foregoing steps S601 to S603 may be replaced with the following steps S601a to S603a (not shown in the figure).

S601a: A terminal device obtains a first address and connection information of a target SEALDD server.

A specific implementation in which the terminal device obtains the first address and the connection information of the target SEALDD server is not limited in this embodiment of this application. For example, the terminal device may query a domain name system server for the first address of the target SEALDD server, or a source SEALDD server may send the first address and the connection information of the target SEALDD server to the terminal device.

S602a: The terminal device sends a request message to the target SEALDD server based on the first address of the target SEALDD server, to request the target SEALDD server to provide a data transmission service for the terminal device.

For information that may be included in the request message, refer to step S602. Details are not described herein again.

S603a: The target SEALDD server sends a response message to the terminal device based on the request message, and sends a second address of the target SEALDD server to the source SEALDD server when accepting a request.

The target SEALDD server determines, based on the request message, whether to accept the request for providing the data transmission service for the terminal device. When the request is accepted, the target SEALDD server sends the response message to the terminal device, indicating that the request is accepted, where the response message may be, for example, an ACK. When the request is not accepted, the target SEALDD server sends the response message to the terminal device, indicating that the request is not accepted, where the response message may be, for example, a NACK.

When accepting the request, the target SEALDD server further sends the second address of the target SEALDD server to the source SEALDD server.

For other implementation details of step S603a, refer to step S603. Details are not described herein again.

It should be noted that, in the foregoing steps S601 to S609, the connection between the terminal device and the source SEALDD server exists permanently until the terminal device or a core network element (for example, the SMF network element) triggers release of the connection between the terminal device and the source SEALDD server.

Based on the foregoing method, the source SEALDD server sends the connection information of the target SEALDD server to the third network element, and sends the second address of the target SEALDD server to the terminal device, so that the terminal device establishes the connection to the target SEALDD server when the terminal device maintains the connection to the source SEALDD server. In this way, the source SEALDD server and the target SEALDD server maintain the connections to the terminal device simultaneously, and provide the data transmission service for the terminal device. This improves the data transmission quality of the terminal device.

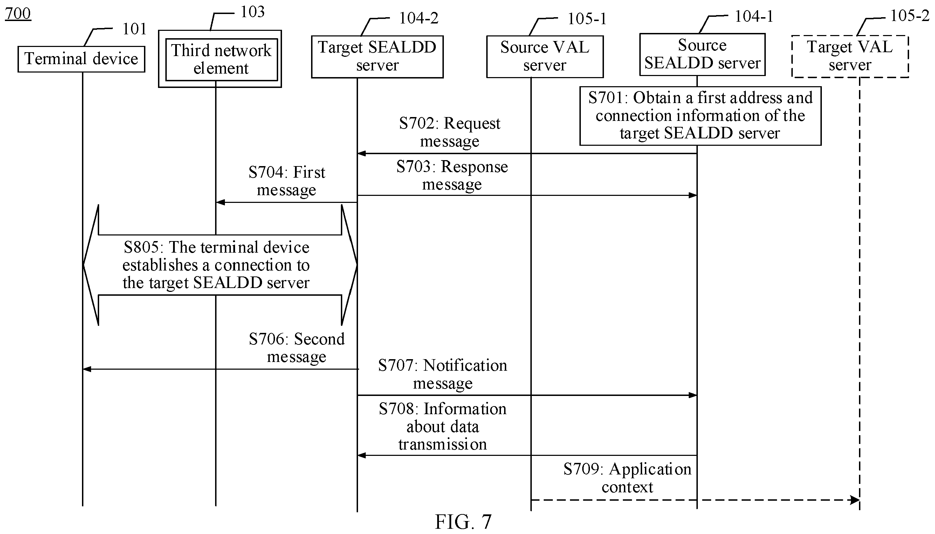

FIG. 7 is a schematic flowchart of still another data transmission method 700 according to an embodiment of this application. The method 700 is similar to the method 600, but a difference lies in that in the method 700, a target SEALDD server sends a first message to a third network element, and the target SEALDD server sends a second message to a terminal device. As shown in FIG. 7, the method includes the following plurality of steps.

S701: A source SEALDD server obtains a first address and connection information of the target SEALDD server.

S702: The source SEALDD server sends a request message to the target SEALDD server based on the first address of the target SEALDD server, to request the target SEALDD server to provide a data transmission service for the terminal device.

For a specific implementation of steps S701 and S702, refer to steps S601 and S602. Details are not described herein again.

S703: The target SEALDD server sends a response message to the source SEALDD server based on the request message.

The target SEALDD server determines, based on the request message, whether to accept a request for providing the data transmission service for the terminal device. When the request is accepted, the target SEALDD server sends the response message to the terminal device, indicating that the request is accepted, where the response message may be, for example, an ACK. When the request is not accepted, the target SEALDD server sends the response message to the terminal device, indicating that the request is not accepted, where the response message may be, for example, a NACK.

S704: The target SEALDD server sends the first message to the third network element. Specifically, when the target SEALDD server accepts the request for providing the data transmission service for the terminal device, the target SEALDD server sends the first message to the third network element.

For other implementation details of step S704, refer to step S604. Details are not described herein again.

S705: The terminal device establishes a connection to the target SEALDD server based on the first message.

For a specific implementation of step S705, refer to step S706. Details are not described herein again.

In step S705, the terminal device establishes the connection to the target SEALDD server, and may perform data transmission over the connection. For example, in step S705, the terminal device establishes a connection to a target UPF network element corresponding to the target SEALDD server. When the target UPF network element receives uplink data from the terminal device, and a destination address of the uplink data is a second address of the target SEALDD server, the target UPF network element may send the uplink data to the target SEALDD server. When the target UPF network element receives downlink data from the target SEALDD server, and a destination address of the downlink data is an address of the terminal device, the target UPF network element may send the downlink data to the terminal device.

S706: The target SEALDD server sends the second message to the terminal device based on the response message, where the second message includes the second address of the target SEALDD. The target SEALDD server may send the second message to the terminal device over the connection established in step S705. For example, the target SEALDD server sets a destination address of the second message as the address of the terminal device, and sends the second message to the target UPF network element corresponding to the target SEALDD server. After step S705 is completed, the target UPF network element sends the second message to the terminal device. In this manner, the target SEALDD server may send the second message to the target UPF network element before or after step S705. This is not limited in this embodiment of this application. Correspondingly, after receiving the second message, the terminal device may set the destination address of the data as the second address of the target SEALDD server, and send the data to the target SEALDD server through the target UPF network element.

S707: The target SEALDD server sends a notification message to the source SEALDD server, to notify that the connection between the terminal device and the target SEALDD server has been established.

S708: The source SEALDD server sends information about the data transmission to the target SEALDD server.

S709: A source VAL server sends an application context to a target VAL server, where this application is an application provided by the source VAL server for the terminal device.

For a specific implementation of steps S707 to S709, refer to step S706. Details are not described herein again.

Optionally, the foregoing steps S701 to S703 may be replaced with the following steps S701a to S703a (not shown in the figure).

S701a: The terminal device obtains a first address and connection information of the target SEALDD server.

S702a: The terminal device sends a request message to the target SEALDD server based on the first address of the target SEALDD server, to request the target SEALDD server to provide a data transmission service for the terminal device.

S703a: The target SEALDD server sends a response message to the terminal device based on the request message.

For specific implementation details of steps S701a to S703a, refer to steps S601a to S603a. Details are not described herein again.

Based on the foregoing method, the target SEALDD server sends the connection information of the target SEALDD server to the third network element, and sends the second address of the target SEALDD server to the terminal device, so that the terminal device establishes the connection to the target SEALDD server when the terminal device maintains a connection to the source SEALDD server. In this way, the source SEALDD server and the target SEALDD server maintain the connections to the terminal device simultaneously, and provide the data transmission service for the terminal device. This improves data transmission quality of the terminal device.

The data transmission method and system provided in embodiments of this application are described above in detail with reference to FIG. 1 to FIG. 7. It may be understood that to implement the foregoing functions, the server needs to include corresponding hardware structures and/or software modules for performing the functions.

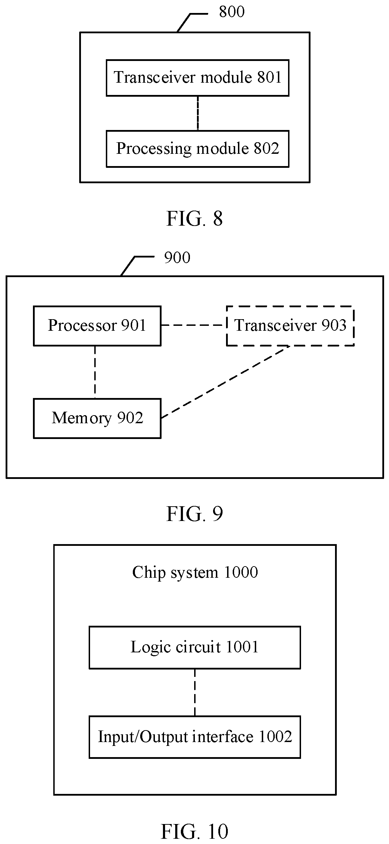

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. The following describes in detail a data transmission apparatus provided in this application with reference to FIG. 8 to FIG. 10. It should be understood that descriptions of the apparatus embodiments correspond to the descriptions of the method embodiments. Therefore, for content that is not described in detail, refer to the foregoing method embodiments. For brevity, some content is not described again.

In embodiments of this application, the device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 8 is a block diagram of a data transmission apparatus 800 according to an embodiment of this application. The apparatus 800 includes a transceiver module 801 and a processing module 802. The transceiver module 801 may implement a corresponding communication function. The processing module 802 is configured to perform data processing. In other words, the transceiver module 801 is configured to perform receiving and sending-related operations, and the processing module 802 is configured to perform operations other than receiving and sending. The transceiver module 801 may also be referred to as a communication interface or a communication unit.

In a design, the apparatus 800 may correspond to the source SEALDD server, or may be a component (for example, a chip) of the source SEALDD server in the foregoing method embodiments.

The apparatus 800 may implement steps or procedures performed by the source SEALDD server in the foregoing method embodiments. The transceiver module 801 may be configured to perform receiving and sending-related operations of the source SEALDD server in the foregoing method embodiments. The processing module 802 may be configured to perform internal processing-related operations of the source SEALDD server in the foregoing method embodiments.

In a possible implementation, the transceiver module 801 is configured to obtain an address of a target SEALDD server; the transceiver module 801 is further configured to send a message to a third network element, where the message includes the address of the target SEALDD server and an address of the source SEALDD server, and the message is for enabling the third network element to configure a fourth network element to replace an address of data transmission of a terminal device during the data transmission of the terminal device; the transceiver module 801 is further configured to send a request message before obtaining the address of the target SEALDD server, where the request message is for requesting to switch the data transmission of the terminal device to the target SEALDD server; the transceiver module 801 is further configured to receive a response to the request message, where the response includes the address of the target SEALDD server; and the transceiver module 801 is further configured to send a context of the terminal device to the target SEALDD server, where the context of the terminal device includes information about the data transmission between the source SEALDD server and the terminal device, and the context of the terminal device is used by the target SEALDD server to provide a data transmission service for the terminal device.

In another possible implementation, the transceiver module 801 is configured to send a first message to a third network element, so that the third network element triggers establishment of a connection between a terminal device and a target SEALDD server of the terminal device; and the transceiver module 801 is further configured to send a second message to the terminal device, where the second message includes an address of the target SEALDD server, and the address of the target SEALDD server is for data transmission between the terminal device and the target SEALDD server after the establishment of the connection.

When the apparatus 800 is configured to perform the method in FIG. 3, the transceiver module 801 may be configured to perform steps of receiving and sending information in the method, for example, steps S301, S302, S303, S304, and S306; and the processing module 802 may be configured to perform internal processing steps in the method.

When the apparatus 800 is configured to perform the method in FIG. 4, the transceiver module 801 may be configured to perform steps of receiving and sending information in the method, for example, steps S401, S402, S403, and S404; and the processing module 802 may be configured to perform internal processing steps in the method.

When the apparatus 800 is configured to perform the method in FIG. 6, the transceiver module 801 may be configured to perform steps of receiving and sending information in the method, for example, steps S601, S602, S603, S604, S605, S607, and S608; and the processing module 802 may be configured to perform internal processing steps in the method.

When the apparatus 800 is configured to perform the method in FIG. 7, the transceiver module 801 may be configured to perform steps of receiving and sending information in the method, for example, steps S701, S702, S703, S707, and S708; and the processing module 802 may be configured to perform internal processing steps in the method.

It should be understood that, for a specific process of performing the foregoing steps by each unit, reference may be made to the descriptions of the foregoing embodiments, and details are not described herein again.

In a design, the apparatus 800 may correspond to the target SEALDD server, or may be a component (for example, a chip) of the target SEALDD server in the foregoing method embodiments.

The apparatus 800 may implement steps or procedures performed by the target SEALDD server in the foregoing method embodiments. The transceiver module 801 may be configured to perform receiving and sending-related operations of the target SEALDD server in the foregoing method embodiments. The processing module 802 may be configured to perform internal processing-related operations of the target SEALDD server in the foregoing method embodiments.

In a possible implementation, the transceiver module 801 is configured to obtain an address of a source SEALDD server; the transceiver module 801 is further configured to send a message to a third network element, where the message includes the address of the source SEALDD server and an address of the target SEALDD server, and the message is for enabling the third network element to configure a fourth network element to replace an address of data transmission of a terminal device during the data transmission of the terminal device; the transceiver module 801 is further configured to receive a request message from the source SEALDD server before obtaining the address of the source SEALDD server, where the request message is for requesting to switch the data transmission of the terminal device to the target SEALDD server, and the request message includes the address of the target SEALDD server; and the transceiver module 801 is further configured to receive a context of the terminal device from the source SEALDD server, where the context of the terminal device includes information about the data transmission between the source SEALDD server and the terminal device, and the context of the terminal device is used by the target SEALDD server to provide a data transmission service for the terminal device.

In another possible implementation, the transceiver module 801 is configured to send a first message to a third network element, so that the third network element triggers establishment of a connection between a terminal device and the target SEALDD server of the terminal device, where a first server is a source server or the target SEALDD server of the terminal device, and the terminal device has a dual-connectivity capability; and the transceiver module 801 is further configured to send a second message to the terminal device, where the second message includes an address of the target SEALDD server, and the address of the target SEALDD server is for data transmission between the terminal device and the target SEALDD server after the establishment of the connection.

When the apparatus 800 is configured to perform the method in FIG. 3, the transceiver module 801 may be configured to perform steps of receiving and sending information in the method, for example, steps S302, S303, and S304; and the processing module 802 may be configured to perform internal processing steps in the method.

When the apparatus 800 is configured to perform the method in FIG. 4, the transceiver module 801 may be configured to perform steps of receiving and sending information in the method, for example, steps S402, S403, S404, and S406; and the processing module 802 may be configured to perform internal processing steps in the method.

When the apparatus 800 is configured to perform the method in FIG. 6, the transceiver module 801 may be configured to perform steps of receiving and sending information in the method, for example, steps S602, S603, S607, and S608; and the processing module 802 may be configured to perform internal processing steps in the method.

When the apparatus 800 is configured to perform the method in FIG. 7, the transceiver module 801 may be configured to perform steps of receiving and sending information in the method, for example, steps S702, S703, S707, and S708; and the processing module 802 may be configured to perform internal processing steps in the method.

It should be understood that, for a specific process of performing the foregoing steps by each unit, reference may be made to the descriptions of the foregoing embodiments, and details are not described herein again.

It should also be understood that the apparatus 800 herein is presented in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, the transceiver module 801 may alternatively be a transceiver circuit (for example, may include a receiver circuit and a transmitter circuit), and the processing module 802 may be a processing circuit.

The apparatus 800 in each of the foregoing solutions has functions of implementing corresponding steps performed by the devices (for example, the source SEALDD server and the target SEALDD server) in the foregoing methods. The functions may be implemented by hardware, or may be implemented by hardware executing corresponding software. The hardware or software includes one or more modules corresponding to the foregoing functions. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform receiving and sending operations and a related processing operation in the method embodiments.

FIG. 9 is a diagram of another communication apparatus 900 according to an embodiment of this application. The apparatus 900 includes one or more processors 901 and one or more memories 902. The processor 901 is configured to: execute a computer program or instructions stored in the memory 902, or read data/signaling stored in the memory 902, to perform the methods in the foregoing method embodiments. The memory 902 is configured to store the computer program or the instructions and/or the data. The memory 902 may be integrated with the processor 901, or may be disposed separately.

Optionally, as shown in FIG. 9, the apparatus 900 further includes a transceiver 903. The transceiver 903 is configured to receive and/or send a signal. For example, the processor 901 is configured to control the transceiver 903 to receive and/or send the signal.

In a solution, the apparatus 900 is configured to implement operations performed by the source SEALDD server in the foregoing method embodiments.

In another solution, the apparatus 900 is configured to implement operations performed by the target SEALDD server in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor. It should further be noted that the memory described in this specification is intended to include, but is not limited to, these and any other suitable type of memory.

FIG. 10 is a diagram of a chip system 1000 according to an embodiment of this application. The chip system 1000 (or may be referred to as a processing system) includes a logic circuit 1001 and an input/output interface (input/output interface) 1002.

The logic circuit 1001 may be a processing circuit in the chip system 1000. The logic circuit 1001 may be coupled to a storage unit, and invoke instructions in the storage unit, so that the chip system 1000 can implement the methods and functions in embodiments of this application. The input/output interface 1002 may be an input/output circuit in the chip system 1000, and outputs information processed by the chip system 1000, or inputs to-be-processed data or signaling information to the chip system 1000 for processing.

In a solution, the chip system 1000 is configured to implement operations performed by the source SEALDD server and the target SEALDD server in the foregoing method embodiments. For example, the logic circuit 1001 is configured to implement internal processing-related operations performed by the source SEALDD server and the target SEALDD server in the foregoing method embodiments; and the input/output interface 1002 is configured to implement sending and/or receiving-related operations performed by the source SEALDD server and the target SEALDD server in the foregoing method embodiments.

For explanations and beneficial effect of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

An embodiment of this application further provides a data transmission system, including two apparatuses. One of the two apparatuses in the data transmission system is a source SEALDD server or a target SEALDD server, and the other apparatus is a third network element. The source SEALDD server is configured to implement operations performed by the source SEALDD server in the foregoing method embodiments, the target SEALDD server is configured to implement operations performed by the target SEALDD server in the foregoing method embodiments, and the third network element is configured to implement operations performed by the third network element in the foregoing method embodiments. One of the two apparatuses in the data transmission system may be a source SEALDD server or a target SEALDD server, and the other apparatus is a terminal device. The source SEALDD server is configured to implement operations performed by the source SEALDD server in the foregoing method embodiments, the target SEALDD server is configured to implement operations performed by the target SEALDD server in the foregoing method embodiments, and the terminal device is configured to implement operations performed by the terminal device in the foregoing method embodiments.

An embodiment of this application further provides a computer-readable storage medium. The computer-readable storage medium stores computer instructions for implementing the method performed by the source SEALDD server and the target SEALDD server in the foregoing method embodiments. For example, when the computer program is executed by a computer, the computer is enabled to implement the method performed by the source SEALDD server and the target SEALDD server in the foregoing method embodiments.

All or some of the foregoing embodiments may be implemented by software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium includes but is not limited to any medium that can store program code, such as a USB flash drive, a removable hard disk, a ROM, a RAM, a magnetic disk, or an optical disc.

For ease of understanding of embodiments of this application, the following descriptions are provided.

First, in various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in embodiments of this application, "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In the descriptions of this application, the character "/" usually indicates an "or" relationship between the associated obj ects.

Third, in embodiments of this application, "first", "second", and various numbers (for example, #1 and #2) indicate differentiation for ease of description, but are not used to limit the scope of embodiments of this application. For example, different messages are distinguished, rather than describing a particular order or sequence. It should be understood that the objects described in such a way are interchangeable in a proper circumstance, so that a solution other than embodiments of this application can be described.

Fourth, in embodiments of this application, descriptions such as "when...", "in a case of...", and "if" all mean that a device performs corresponding processing in an objective case, and are not limited to time, and the device is not required to perform a determining action during implementation. This does not mean that there is another limitation.

Fifth, in embodiments of this application, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Sixth, in embodiments of this application, "being used to indicate" may include "being used to directly indicate" and "being used to indirectly indicate". When a piece of indication information is described as indicating A, the indication information may directly indicate A or indirectly indicate A, but it does not indicate that the indication information definitely carries A.

The indication manners in embodiments of this application should be understood as covering various methods that can enable the to-be-indicated party to learn of the to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, that is, may be directly indicated by signaling, or may be obtained based on a parameter indicated by signaling with reference to another rule or another parameter, or obtained through derivation. The "indication information" may also be an implicit indication, that is, may be obtained based on a rule or a relationship, or based on another parameter, or through derivation. This is not specifically limited in this application.

Seventh, in embodiments of this application, "being stored" may be "being stored in one or more memories". The one or more memories may be separately disposed, or may be integrated into an encoder, a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
obtaining, by a first data transmission server, an address of a second data transmission server, wherein one of the first data transmission server and the second data transmission server is a source data transmission server serving a terminal device, and the other is a target data transmission server of the terminal device; and
sending, by the first data transmission server, a message to a third network element, wherein the message comprises the address of the second data transmission server and an address of the first data transmission server, and the message is for enabling the third network element to configure a fourth network element to replace an address of data transmission of the terminal device during the data transmission of the terminal device; and
the address of the second data transmission server is for data transmission between the terminal device and the second data transmission server, the address of the first data transmission server is for data transmission between the terminal device and the first data transmission server, and the replacing an address of data transmission of the terminal device comprises:
replacing the address of the data transmission of the terminal device with an address of the target data transmission server from an address of the source data transmission server, wherein the data transmission of the terminal device is uplink transmission; and/or
replacing the address of the data transmission of the terminal device with the address of the source data transmission server from the address of the target data transmission server, wherein the data transmission of the terminal device is downlink transmission.

2. The method according to claim 1, wherein the first data transmission server is the source data transmission server serving the terminal device, and the second data transmission server is the target data transmission server of the terminal device;
before the obtaining, by a first data transmission server, an address of a second data transmission server, the method further comprises: sending, by the first data transmission server, a request message, wherein the request message is for requesting to switch the data transmission of the terminal device to the second data transmission server; and
the obtaining, by a first data transmission server, an address of a second data transmission server comprises: receiving, by the first data transmission server, a response to the request message, wherein the response comprises the address of the second data transmission server.

3. The method according to claim 2, wherein the request message further comprises information about a data flow used for the data transmission of the terminal device and a context corresponding to the data flow.

4. The method according to claim 3, wherein the information about the data flow used for the data transmission of the terminal device is an identifier of the data flow.

5. The method according to claim 3 or 4, wherein the context corresponding to the data flow comprises information about data transmission of the data flow.

6. The method according to any one of claims 3 to 5, wherein the sending, by the first data transmission server, a message to a third network element comprises:
sending, by the first data transmission server, the message to the third network element after transmission of the context corresponding to the data flow is completed.

7. The method according to claim 2, wherein after the obtaining, by a first data transmission server, an address of a second data transmission server, the method further comprises:
sending, by the first data transmission server, a context of the terminal device to the second data transmission server, wherein the context of the terminal device comprises information about the data transmission between the first data transmission server and the terminal device, and the context of the terminal device is used by the second data transmission server to provide a data transmission service for the terminal device.

8. The method according to claim 1, wherein the first data transmission server is the target data transmission server serving the terminal device, and the second data transmission server is the source data transmission server of the terminal device; and
before the obtaining, by a first data transmission server, an address of a second data transmission server, the method further comprises: receiving, by the first data transmission server, a request message from the second data transmission server, wherein the request message is for requesting to switch the data transmission of the terminal device to the first data transmission server, and the request message comprises the address of the second data transmission server.

9. The method according to claim 8, wherein after the obtaining, by a first data transmission server, an address of a second data transmission server, the method further comprises:
receiving, by the first data transmission server, a context of the terminal device from the second data transmission server, wherein the context of the terminal device comprises information about the data transmission between the second data transmission server and the terminal device, and the context of the terminal device is used by the first data transmission server to provide a data transmission service for the terminal device.

10. The method according to any one of claims 1 to 9, wherein the message comprises indication information, and the indication information indicates to replace the address of the data transmission of the terminal device.

11. The method according to any one of claims 2 to 10, wherein the request message comprises second indication information, and the second indication information indicates to switch the data transmission of the terminal device to the target data transmission server by replacing the address of the data transmission of the terminal device.

12. The method according to any one of claims 1 to 11, wherein the first data transmission server and the second data transmission server are service enabler architecture layer data delivery servers.

13. A data transmission method, comprising:
sending, by a first data transmission server, a first message to a third network element, to enable the third network element to trigger establishment of a connection between a terminal device and a target data transmission server of the terminal device, wherein the first data transmission server is a source data transmission server of the terminal device or the target data transmission server, and the terminal device has a dual-connectivity capability; and
sending, by the first data transmission server, a second message to the terminal device, wherein the second message comprises an address of the target data transmission server, and the address of the target data transmission server is for data transmission between the terminal device and the target data transmission server after the establishment of the connection.

14. The method according to claim 13, wherein that the terminal device has a dual-connectivity capability comprises: the terminal device has a capability of connecting to both the source data transmission server and the target data transmission server.

15. The method according to claim 13 or 14, wherein the first message comprises connection information, and the connection information is for the establishment of the connection between the terminal device and the target data transmission server.

16. The method according to any one of claims 13 to 15, wherein the third network element is configured to maintain both a connection between the terminal device and the source data transmission server and the connection between the terminal device and the target data transmission server.

17. The method according to any one of claims 13 to 16, wherein the first data transmission server is the source data transmission server of the terminal device; and before the sending, by a first data transmission server, a first message to a third network element, the method further comprises:
sending, by the first data transmission server, a request message to the target data transmission server, wherein the request message is for requesting the target data transmission server to provide a data transmission service for the terminal device; and
receiving, by the first data transmission server, a response to the request message from the target data transmission server, wherein the response comprises the address of the target data transmission server.

18. The method according to claim 13, further comprising: maintaining, by the first data transmission server, a connection to the terminal device after sending the first message and the second message.

19. The method according to any one of claims 14 to 18, wherein after the sending, by the first data transmission server, a second message to the third network element, the method further comprises:
learning, by the first data transmission server, that the connection between the terminal device and the target data transmission server has been established; and
sending, by the first data transmission server, information about data transmission between the first data transmission server and the terminal device to the target data transmission server, wherein the information about the data transmission is for the data transmission between the terminal device and the target data transmission server.

20. The method according to any one of claims 13 to 16, wherein the first data transmission server is the target data transmission server of the terminal device; and before the sending, by a first data transmission server, a first message to a third network element, the method further comprises:
receiving, by the first data transmission server, a request message from the terminal device, wherein the request message is for requesting the target data transmission server to provide a data transmission service for the terminal device; or
receiving, by the first data transmission server, a request message from the source data transmission server, wherein the request message is for requesting the target data transmission server to provide a data transmission service for the terminal device.

21. The method according to claim 20, wherein after the sending, by the first data transmission server, a second message to the third network element, the method further comprises:
notifying, by the first data transmission server, the source data transmission server that a connection between the terminal device and the first data transmission server has been established; and
receiving, by the first data transmission server from the source data transmission server, information about data transmission between the source data transmission server and the terminal device, wherein the information about the data transmission is for data transmission between the terminal device and the first data transmission server.

22. An apparatus, comprising a module configured to implement the method according to any one of claims 1 to 21.

23. An apparatus, comprising a processor and a memory, wherein the memory is configured to store instructions, and when the instructions are executed by the processor, the processor is enabled to implement the method according to any one of claims 1 to 21.

24. A computer-readable storage medium, wherein the computer-readable storage medium stores instructions, and when the instructions are run on a computer, the computer is enabled to perform the method according to any one of claims 1 to 21.

25. A computer program product comprising instructions, wherein when the instructions are run on a computer, the computer is enabled to perform the method according to any one of claims 1 to 21.

26. A data transmission method, comprising:
obtaining, by a first data transmission server, an address of a second data transmission server, wherein one of the first data transmission server and the second data transmission server is a source data transmission server serving a terminal device, and the other is a target data transmission server of the terminal device;
sending, by the first data transmission server, a message to a third network element, wherein the message comprises the address of the second data transmission server and an address of the first data transmission server, the address of the second data transmission server is for data transmission between the terminal device and the second data transmission server, and the address of the first data transmission server is for data transmission between the terminal device and the first data transmission server; and
configuring, by the third network element based on the message, a fourth network element to replace an address of the data transmission of the terminal device during the data transmission of the terminal device, wherein the replacing an address of the data transmission of the terminal device comprises:
replacing the address of the data transmission of the terminal device with an address of the target data transmission server from an address of the source data transmission server, wherein the data transmission of the terminal device is uplink transmission; and/or
replacing the address of the data transmission of the terminal device with the address of the source data transmission server from the address of the target data transmission server, wherein the data transmission of the terminal device is downlink transmission.

27. The method according to claim 26, wherein the method further comprises:
by the fourth network element, replacing the address of the data transmission of the terminal device with the address of the target data transmission server from the address of the source data transmission server, wherein the data transmission of the terminal device is the uplink transmission; and/or replacing the address of the data transmission of the terminal device with the address of the source data transmission server from the address of the target data transmission server, wherein the data transmission of the terminal device is the downlink transmission.

28. The method according to claim 26 or 27, wherein the first data transmission server is the source data transmission server serving the terminal device, and the second data transmission server is the target data transmission server of the terminal device;
before the obtaining, by a first data transmission server, an address of a second data transmission server, the method further comprises: sending, by the first data transmission server, a request message, wherein the request message is for requesting to switch the data transmission of the terminal device to the second data transmission server; and
the obtaining, by a first data transmission server, an address of a second data transmission server comprises: receiving, by the first data transmission server, a response to the request message, wherein the response comprises the address of the second data transmission server.

29. The method according to claim 28, wherein the request message further comprises information about a data flow used for the data transmission of the terminal device and a context corresponding to the data flow.

30. The method according to claim 29, wherein the information about the data flow used for the data transmission of the terminal device is an identifier of the data flow.

31. The method according to claim 29 or 30, wherein the context corresponding to the data flow comprises information about data transmission of the data flow.

32. The method according to any one of claims 29 to 31, wherein the sending, by the first data transmission server, a message to a third network element comprises:
sending, by the first data transmission server, the message to the third network element after transmission of the context corresponding to the data flow is completed.

33. The method according to any one of claims 26 to 32, wherein the first data transmission server and the second data transmission server are service enabler architecture layer data delivery servers.

34. A data transmission method, comprising:
sending, by a first data transmission server, a first message to a third network element;
triggering, by the third network element based on the first message, establishment of a connection between a terminal device and a target data transmission server of the terminal device; and
sending, by the first data transmission server, a second message to the terminal device, wherein the second message comprises an address of the target data transmission server, and the address of the target data transmission server is for data transmission between the terminal device and the target server after the establishment of the connection; and
the first data transmission server is a source data transmission server of the terminal device or the target data transmission server, and the terminal device has a dual-connectivity capability.

35. A data transmission method, comprising:
sending, by a first data transmission server, a first message to a third network element, to enable the third network element to trigger establishment of a connection between a terminal device and a target data transmission server of the terminal device, wherein the first data transmission server is a source data transmission server of the terminal device or the target data transmission server, and the terminal device has a dual-connectivity capability;
sending, by the first data transmission server, a second message to the terminal device, wherein the second message comprises an address of the target data transmission server; and
performing, by the terminal device, data transmission with the target data transmission server based on the address of the target data transmission server after the establishment of the connection.

36. A data transmission system, comprising a first data transmission server and a third network element, wherein
the first data transmission server is configured to obtain an address of a second data transmission server, wherein one of the first data transmission server and the second data transmission server is a source data transmission server serving a terminal device, and the other is a target data transmission server of the terminal device;
the first data transmission server is further configured to send a message to the third network element, wherein the message comprises the address of the second data transmission server and an address of the first data transmission server; and
the third network element is configured to configure, based on the message, a fourth network element to replace an address of data transmission of the terminal device during the data transmission of the terminal device, wherein
the address of the second data transmission server is for data transmission between the terminal device and the second data transmission server, the address of the first data transmission server is for data transmission between the terminal device and the first data transmission server, and the replacing an address of data transmission of the terminal device comprises:
replacing the address of the data transmission of the terminal device with an address of the target data transmission server from an address of the source data transmission server, wherein the data transmission of the terminal device is uplink transmission; and/or
replacing the address of the data transmission of the terminal device with the address of the source data transmission server from the address of the target data transmission server, wherein the data transmission of the terminal device is downlink transmission.

37. The system according to claim 36, further comprising the fourth network element, configured to:
replace the address of the data transmission of the terminal device with the address of the target data transmission server from the address of the source data transmission server, wherein the data transmission of the terminal device is the uplink transmission; and/or
replace the address of the data transmission of the terminal device with the address of the source data transmission server from the address of the target data transmission server, wherein the data transmission of the terminal device is the downlink transmission.

38. The method according to claim 36 or 37, wherein the first data transmission server is the source data transmission server serving the terminal device, and the second data transmission server is the target data transmission server of the terminal device;
before the first data transmission server obtains the address of the second data transmission server, the method further comprises: sending, by the first data transmission server, a request message, wherein the request message is for requesting to switch the data transmission of the terminal device to the second data transmission server; and
that the first data transmission server obtains the address of the second data transmission server comprises: receiving, by the first data transmission server, a response to the request message, wherein the response comprises the address of the second data transmission server.

39. The method according to claim 38, wherein the request message further comprises information about a data flow used for the data transmission of the terminal device and a context corresponding to the data flow.

40. The method according to claim 39, wherein the information about the data flow used for the data transmission of the terminal device is an identifier of the data flow.

41. The method according to claim 39 or 40, wherein the context corresponding to the data flow comprises information about data transmission of the data flow.

42. The method according to any one of claims 39 to 41, wherein that the first data transmission server sends the message to the third network element comprises:
sending, by the first data transmission server, the message to the third network element after transmission of the context corresponding to the data flow is completed.

43. The method according to any one of claims 36 to 42, wherein the first data transmission server and the second data transmission server are service enabler architecture layer data delivery servers.

44. A data transmission system, comprising a first data transmission server and a third network element, wherein
the first data transmission server is configured to send a first message to the third network element;
the third network element is configured to trigger, based on the first message, establishment of a connection between a terminal device and a target data transmission server of the terminal device; and
the first data transmission server is further configured to send a second message to the terminal device, wherein the second message comprises an address of the target data transmission server, and the address of the target data transmission server is for data transmission between the terminal device and the target data transmission server after the establishment of the connection; and
the first data transmission server is a source data transmission server of the terminal device or the target data transmission server, and the terminal device has a dual-connectivity capability.

45. A data transmission system, comprising a first data transmission server and a terminal device, wherein
the first data transmission server is configured to send a first message to a third network element, to enable the third network element to trigger establishment of a connection between the terminal device and a target data transmission server of the terminal device, wherein the first data transmission server is a source data transmission server of the terminal device or the target data transmission server, and the terminal device has a dual-connectivity capability;
the first data transmission server is further configured to send a second message to the terminal device, wherein the second message comprises an address of the target data transmission server; and
the terminal device is configured to perform data transmission with the target data transmission server based on the address of the target data transmission server after the establishment of the connection.
